(19) **Europäisches Patentamt / European Patent Office / Office européen des brevets**

(11) **EP 4 383 921 A1**

(12) # EUROPEAN PATENT APPLICATION
published in accordance with Art. 153(4) EPC

(43) Date of publication:
**12.06.2024 Bulletin 2024/24**

(21) Application number: **22853521.7**

(22) Date of filing: **05.08.2022**

(51) International Patent Classification (IPC):
**H04W 74/08** $^{(2009.01)}$     **H04W 74/00** $^{(2009.01)}$
**H04W 8/24** $^{(2009.01)}$

(52) Cooperative Patent Classification (CPC):
**H04W 8/24; H04W 74/00; H04W 74/08**

(86) International application number:
**PCT/KR2022/011620**

(87) International publication number:
**WO 2023/014146 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.08.2021 KR 20210103449**

(71) Applicant: **LG Electronics Inc.**
**Yeongdeungpo-gu**
**Seoul 07336 (KR)**

(72) Inventors:
• **LEE, Youngdae**
  **Seoul 06772 (KR)**
• **KIM, Jaehyung**
  **Seoul 06772 (KR)**
• **YANG, Suckchel**
  **Seoul 06772 (KR)**
• **HWANG, Seunggye**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR PERFORMING RANDOM ACCESS PROCEDURE IN WIRELESS COMMUNICATION SYSTEM**

(57)     Disclosed are a method and device for performing a random access procedure in a wireless communication system. A method for performing a random access by a terminal in a wireless communication system, according to one embodiment of the present disclosure, may comprise the steps of: receiving, from a base station, configuration information on an initial bandwidth part (initial BWP) for a terminal having reduced capability; and on the basis of detecting a link failure, transmitting, to the base station, a physical random access channel (PRACH) preamble in the initial bandwidth part. Here, on the basis of the initial bandwidth part being associated with one or more PRACH resource sets, the PRACH preamble may be transmitted in a PRACH resource set related to the reduced capability from among the one or more PRACH resource sets.

**FIG.7**

```
        START
          │
          ▼
┌──────────────────────────┐
│ Receive initial BWP      │  S710
│ configuration            │
│ for RedCap UE            │
└──────────────────────────┘
          │
          ▼
┌──────────────────────────┐
│ Transmit PRACH preamble  │  S720
│ based on link failure    │
│ detection                │
└──────────────────────────┘
          │
          ▼
         END
```

EP 4 383 921 A1

**Description**

[Technical Field]

The present disclosure relates to a wireless communication system, and in more detail, relates to a method and an apparatus of performing random access procedure in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and apparatus for performing a random access procedure.

A technical object of the present disclosure is to provide a method and apparatus for performing a random access procedure in consideration of a user equipment (UE) with reduced capability.

The technical objects to be achieved by the present disclosure are not limited to the above-described technical objects, and other technical objects which are not described herein will be clearly understood by those skilled in the pertinent art from the following description.

[Technical Solution]

A method for performing random access by a UE in a wireless communication system according to an aspect of the present disclosure may comprise: receiving, from a base station, configuration information for an initial bandwidth part (BWP) for a UE with reduced capability; and transmitting, to the base station, a physical random access channel (PRACH) preamble in the initial BWP based on detecting a link failure. Herein, based on the initial BWP being associated with one or more PRACH resource sets, the PRACH preamble may be transmitted in a PRACH resource set related to the reduced capability among the one or more PRACH resource sets.

A method for performing random access by a base station in a wireless communication system according to an additional aspect of the present disclosure may comprise: transmitting, to a user equipment (UE), configuration information for an initial bandwidth part (BWP) for a UE with reduced capability; and receiving, from the UE, a physical random access channel (PRACH) preamble in the initial BWP based on detecting a link failure. Herein, based on the initial BWP being associated with one or more PRACH resource sets, the PRACH preamble may be transmitted in a PRACH resource set related to the reduced capability among the one or more PRACH resource sets.

[Technical Effects]

According to an embodiment of the present disclosure, a UE may initially identify a specific capability or a reduced capability of the UE in a random access procedure of a base station by performing a random access procedure according to a random access configuration according to its capability.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram illustrating an operation of a UE for a method for performing a random access procedure according to an embodiment of the present disclosure.
FIG. 8 is a diagram illustrating an operation of a base station for a method of performing a random access procedure according to an embodiment of the present disclosure.
FIG. 9 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition,"/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator

- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

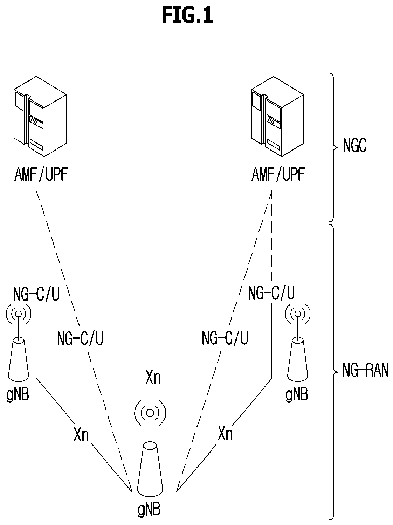

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

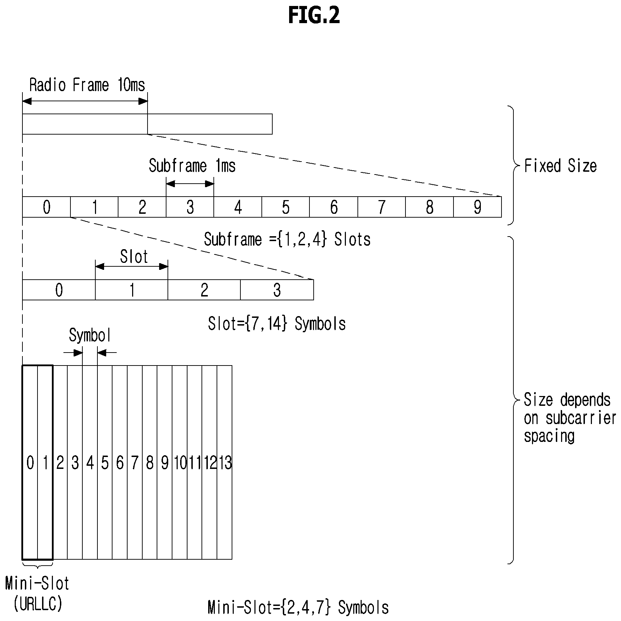

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot10^3$ Hz and Nf is 4096. Downlink and uplink transmission is configured (organized) with a radio frame having a duration of $T_f=1/(\Delta f_{max}N_f/100)\cdot T_c=10$ms. Here, a radio frame is configured with 10 subframes having a duration of $T_{sf}=(\Delta f_{max}N_f/1000)\cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^\mu\in\{0,...,N_{slot}^{subframe,\mu}-1\}$ in a subframe and are numbered in an increasing order of $n_{s,f}^\mu\in\{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

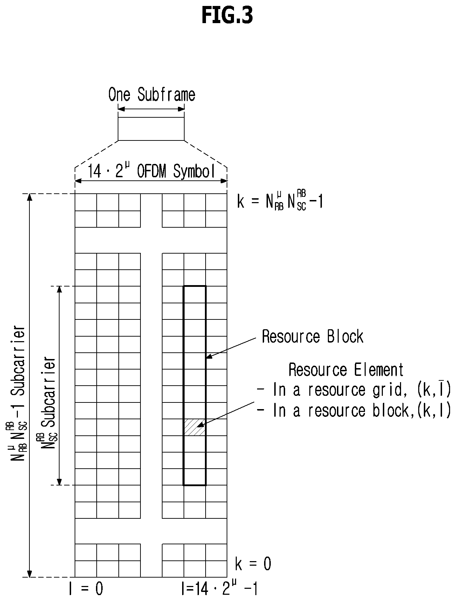

FIG. 3 illustrates a resource grid in a wireless communication system to which the present disclosure may be applied.

In reference to FIG. 3, it is illustratively described that a resource grid is configured with $N_{RB}^{\mu} N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu} N_{symb}^{(\mu)}$ and one or more resource grids configured with $N_{RB}^{\mu} N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu} N_{sc}^{RB}-1$ is an index in a frequency domain and $l'=0,...,2^{\mu} N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

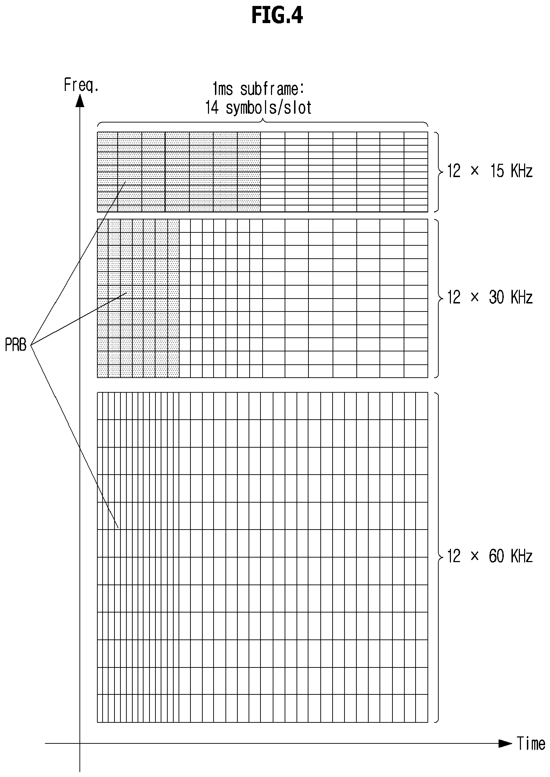

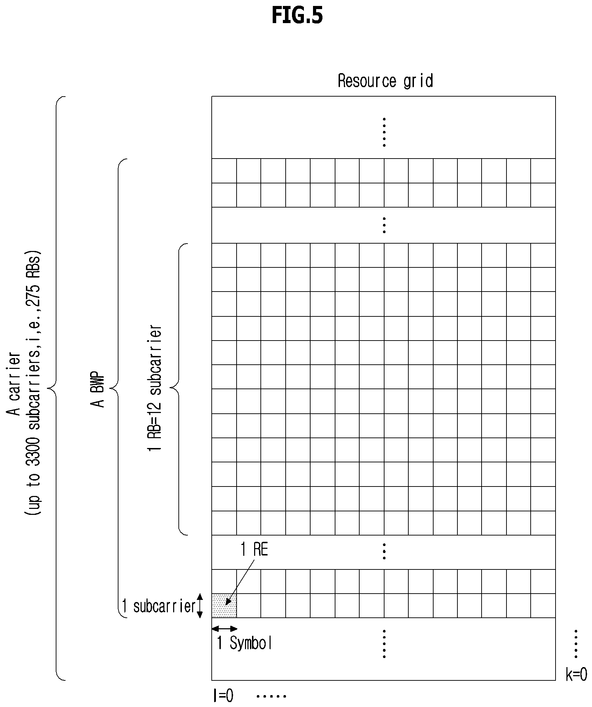

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

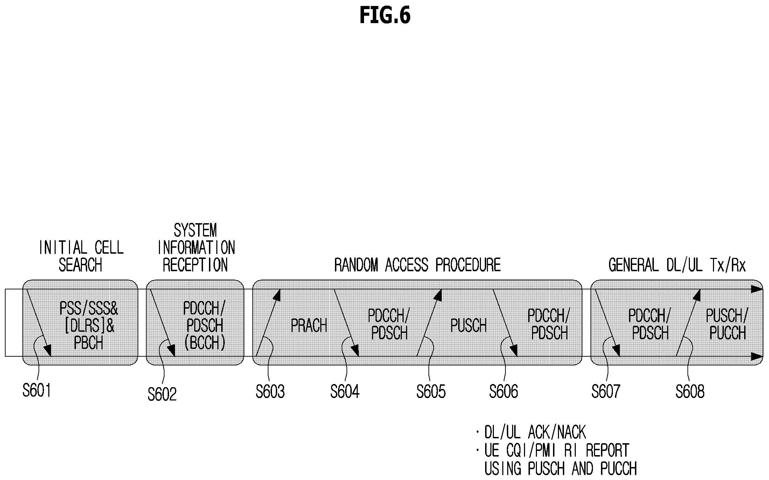

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

System information acquisition

The terminal may obtain Access Stratum (AS)-information/Non Access Stratum (NAS)-information through a system information (SI) acquisition process. This SI acquisition process may be applied to terminals in RRC_IDLE state, RRC_INACTIVE state, and RRC_CONNECTED state.

The system information acquisition process is as follows. A cell (e.g., a base station (BS)) transmits a Master Information Block (MIB) to a terminal (e.g., UE). Then, the cell may transmit System Information Block 1 (SIB1) to the terminal. Then, the terminal may transmit a System Information Request (System Information Request) to the cell, and accordingly, the cell may transmit System Information message (s) to the terminal.

System information may be divided into MIB and multiple SIBs. SI other than MIB may be referred to as Remaining Minimum System Information (RMSI) and Other System Information (OSI). Here, RMSI corresponds to SIB1, and OSI refers to SIBs other than SIB2 and higher than SIB2.

Specifically, the MIB includes information/parameters related to SIB1 reception and is transmitted through the PBCH of the SSB. The MIB may include a common subcarrier spacing (e.g., subCarrierSpacingCommon), a subcarrier offset of SSB (e.g., ssb-SubcarrierOffset), and a PDCCH configuration for SBI1 (e.g., pdcch-ConfigSIB1).

Upon initial cell selection, the UE assumes that half-frames with SSBs are repeated at 20 ms intervals. The UE may check whether a Control Resource Set (CORESET) exists for the TypeO-PDCCH common search space based on the MIB. The TypeO-PDCCH common search space is a type of PDCCH search space and is used to transmit a PDCCH for scheduling SI messages. When the TypeO-PDCCH common search space exists, the UE uses (i) a plurality of contiguous RBs and one or more contiguous symbols constituting the CORESET and (ii) a PDCCH occasion based on information in the MIB (e.g., pdcch-ConfigSIB1) (i.e., time domain location for PDCCH reception) may be determined. Specifically, pdcch-ConfigSIB1 is 8-bit information, (i) is determined based on 4 bits of Most Significant Bit (MSB), and (ii) is determined based on 4 bits of Least Significant Bit (LSB). When the TypeO-PDCCH common search space does not exist, pdcch-ConfigSIB1 provides information on a frequency location where SSB/SIB1 exists and a frequency range where SSB/SIB1 does not exist.

SIB1 includes information related to availability and scheduling (e.g., transmission period, SI-window size) of the remaining SIBs (hereinafter, SIBx, where x is an integer greater than or equal to 2). For example, SIB1 may inform whether SIBx is periodically broadcast or provided at the request of the UE through an on-demand method. When SIBx is provided by an on-demand method, SIB1 may include information necessary for the UE to perform an SI request. SIB1 is transmitted through the PDSCH, the PDCCH scheduling SIB1 is transmitted through the TypeO-PDCCH common search space, and SIB1 is transmitted through the PDSCH indicated by the PDCCH. SIBx is included in the SI message and transmitted through the PDSCH. Each SI message is transmitted within a periodically occurring time window (i.e., SI-window).

Random Access operation and Related operation

When there is no PUSCH transmission resource (i.e., uplink grant) allocated by the base station, the UE may perform a random access operation. Random access in the NR system is 1) when the UE requests or resumes RRC connection, 2) when the UE performs handover to a neighboring cell or SCG addition, 3) scheduling request to the base station (Scheduling Request), 4) when the base station instructs random access of the terminal in PDCCH order, 5) when beam failure or RRC connection failure is detected.

The random access procedure (i.e., RACH procedure) of LTE and NR may include 4 steps of Msg1 (PRACH preamble) transmission of the UE, Msg2 (RAR, random access response) transmission of the base station, Msg3 (PUSCH) transmission of the UE, and Msg4 (PDSCH) transmission of the base station.

That is, the UE transmits a Physical Random Access Channel (PRACH) preamble and receives a Random Access Response (RAR) in response thereto. When the preamble is a UE-dedicated resource, that is, in the case of Contention Free Random Access (CFRA), the random access operation is terminated by receiving the RAR corresponding to the UE itself. If the preamble is a common resource, that is, in the case of Contention Based Random Access (CBRA), after receiving the RAR including the RACH Preamble ID (RAPID) selected by the UE and the uplink PUSCH resource, Msg3 is transmitted through the PUSCH with the corresponding resource, and the random access operation is terminated after receiving a contention resolution message through PDSCH. In this case, time and frequency resources for mapping/transmitting the PRACH preamble signal are defined as RACH Occasion (RO), and time and frequency resources for mapping/transmitting the Msg3 PUSCH signal are defined as PUSCH Occasion (PO).

Meanwhile, in NR Rel-16 standardization and NR-U, a 2-step RACH procedure that simplifies the process of the 4-step RACH procedure described above has been introduced. The 2-step RACH procedure includes transmission of MsgA (PRACH preamble + Msg3 PUSCH) of the UE and transmission of MsgB (RAR + Msg4 PDSCH) of the base station (gNB).

The PRACH format for transmitting the PRACH preamble in the NR system consists of a format consisting of length 839 sequences (named long RACH format for convenience) and a format consisting of length 139 sequences (named short RACH format for convenience). For example, in frequency range 1 (FR1), the sub-carrier spacing (SCS) of the corresponding short RACH format is defined as 15 or 30 kHz. In addition, RACH may be transmitted by carrying 139 tones among 12 RBs (i.e., 144 REs). In this case, 5 null tones may be considered (e.g., 2 null tones for the lower RE index and 3 null tones for the upper RE index).

On the other hand, the base station may inform the UE of which PRACH format may be transmitted for a specific duration at a specific timing through higher layer signaling (e.g., RRC signaling or MAC CE or DCI), and how many ROs (RACH occasions or PRACH occasions) exist in the corresponding slot.

For example, referring to a predetermined standard (e.g., Table 6.3.3.2-2 to Table 6.3.3.2-4 of the 3GPP TS 38.211 standard), the base station and/or the UE may recognize information on how many ROs are defined in the corresponding RACH slot for each preamble format and how many OFDM symbols each PRACH preamble occupies for the corresponding preamble format. In addition, the base station may also inform the UE of information on when the RO starts from a point in the corresponding RACH slot by indicating a starting symbol of the first RO.

Method of performing random access procedure considering a terminal with a reduced capability

- PUCCH: Physical Uplink Control channel
- PUSCH: Physical Uplink Shared Channel
- MCCH: Multicast Control Channel
- MTCH: Multicast Traffic Channel
- RRM: Radio resource management
- RLM: Radio link monitoring
- SCS: Sub-carrier spacing
- RLM: Radio link monitoring
- DCI: Downlink Control Information
- CAP: Channel Access Procedure
- Ucell: Unlicensed cell
- PCell: Primary Cell
- PSCell: Primary SCG Cell
- TBS: Transport Block Size
- TDRA: Time Domain Resource Allocation
- SLIV: Starting and Length Indicator Value (An indication value for a starting symbol index and the number of symbols in a slot of a PDSCH and/or a PUSCH. It may be configured as a component of an entry constituting a TDRA field in a PDCCH that schedules a corresponding PDSCH and/or PUSCH.)
  BWP: BandWidth Part (It may be composed of continuous resource blocks (RBs) on a frequency axis. It may correspond to one numerology (e.g., SCS, CP length, slot/mini-slot duration, etc.). In addition, a plurality of BWPs may be configured in one carrier (the number of BWPs per carrier may also be limited), but the number of activated BWPs may be limited to a part (e.g., one) per carrier.)
- CORESET: control resource set (CONtrol REsourse SET) (It means a time-frequency resource region in which a PDCCH can be transmitted, and the number of CORESETs per BWP may be limited.)
- REG: Resource element group
- SFI: Slot Format Indicator (An indicator indicating a symbol level DL/UL direction within a specific slot(s), transmitted through a group common PDCCH).
- COT: Channel occupancy time
- SPS: Semi-persistent scheduling
- QCL: Quasi-Co-Location (A QCL relationship between two reference signals (RS) may mean that a QCL parameter obtained from one RS such as a Doppler shift, a Doppler spread, an average delay, a delay spread, a spatial Rx parameter, etc. can also be applied to another RS (or antenna port(s) of a corresponding RS). In the NR system, 4 QCL types are defined as follows. 'typeA': {Doppler shift, Doppler spread, average delay, delay spread}, 'typeB': {Doppler shift, Doppler spread}, 'typeC': {Doppler shift, average delay}, 'typeD': {Spatial Rx parameter}. For certain DL RS antenna port(s), a first DL RS may be configured as a reference for QCL type X (X=A, B, C, or D), and a second DL RS may be configured as a reference for QCL type Y (Y=A, B, C, or D, but X≠Y).)
  TCI: Transmission Configuration Indication (One TCI state includes a QCL relationship between DM-RS ports of a PDSCH, DM-RS ports of a PDCCH, or CSI-RS port(s) of a CSI-RS resource and one or more DL RSs. For 'Transmission Configuration Indication' among fields in DCI that schedules a PDSCH, a TCI state index corresponding to each code point constituting the field is activated by a MAC control element (CE), and a TCI state configuration for each TCI state index is configured through RRC signaling. In the Rel-16 NR system, a corresponding TCI state is configured between DL RSs, but a configuration between a DL RS and a UL RS or between a UL RS and a UL RS may be allowed in a future release. Examples of a UL RS include an SRS, a PUSCH DM-RS, and a PUCCH DM-RS.)
- SRI: SRS resource indicator (It indicates one of SRS resource index values configured in 'SRS resource indicator' among fields in DCI scheduling a PUSCH. When transmitting a PUSCH, a UE may transmit the PUSCH using the same spatial domain transmission filter used for transmission and reception of a reference signal associated with the corresponding SRS resource. Here, a reference RS is configured by RRC signaling through an SRS spatial relation information parameter (SRS-SpatialRelationInfo) for each SRS resource, and an SS/PBCH block, a CSI-RS, or an SRS may be configured as the reference RS.)
- TRP: Transmission and Reception Point
- PLMN ID: Public Land Mobile Network identifier
- RACH: Random Access Channel
- RAR: Random Access Response
- Msg3: This is a message transmitted through an uplink shared channel (UL-SCH) including a C-RNTI MAC CE or a common control channel (CCCH) service data unit (SDU), provided from a higher layer, and associated with a UE Contention Resolution Identity as part of a random access procedure.

- Special Cell: In case of a dual connectivity operation, the term special cell refers to the PCell of a master cell group (MCG) or the PSCell of a secondary cell group (SCG) depending on whether a MAC entity is related to the MCG or the SCG, respectively. Otherwise, the term Special Cell refers to the PCell. The Special Cell supports PUCCH transmission and contention-based random access and is always active.
- Serving Cell: It includes the PCell, the PSCell, and the secondary cell (SCell).
- CG: Configured Grant
- Type 1 CG or Type 2 CG: Type 1 configured grant or Type 2 configured grant
- Fall-back DCI: It indicates a DCI format that can be used for a fall-back operation, and for example, corresponds to DCI formats 0_0 and 1_0.
- non-fall-back DCI: It indicates a DCI format other than the fall-back DCI, for example, corresponds to DCI formats 0_1 and 1_1.
- SS: search space
- FDRA: frequency domain resource allocation
- TDRA: time domain resource allocation
- LP, HP: Low(er) priority, High(er) priority
- A/N for cell A: A/N (acknowledgement/negative acknowledgment) information for data (e.g., PDSCH) received in cell A
- UL CI: Uplink cancelation indication
- CFR: Common frequency resource for multicast and broadcast service (MBS). One DL CFR provides group common PDCCH and group common PDSCH transmission resources for MBS transmission and reception. One UL CFR provides HARQ-ACK PUCCH resources for group common PDSCH reception. One CFR is one MBS specific BWP or one UE specific BWP. Alternatively, one or a plurality of CFRs may be configured in one UE specific BWP. One CFR is associated with one UE specific BWP.
- TMGI: Temporary Mobile Group Identity. As an MBS service identifier, it indicates a specific service.
- G-RNTI: Group Radio Network Temporary Identifier. It indicates a UE group identifier that receives an MBS.

The above contents (3GPP system, frame structure, NR system, etc.) can be applied in combination with methods proposed in the present disclosure to be described later, or it may be supplemented to clarify the technical characteristics of the methods proposed in the present disclosure. In this disclosure, '/' means 'and', 'or', or 'and/or' depending on the context.

In the NR Rel-17 standardization, it is intended to support a new type of terminal that supports reduced capability (RedCap), such as a smaller transmission and reception bandwidth size and/or the number of transmission and reception antennas than the UE of the conventional NR system. In addition, it is intended to support a UE supporting a coverage enhancement (CE) capability for supporting a wider coverage than the cell coverage supported by a normal UE.

In the present disclosure, for convenience of description, a terminal supporting the reduced capability as described above is referred to as an R terminal, an R-UE, or a RedCap UE/terminal, and a treminal supporting the coverage enhancement capability is referred to as a CE terminal or a CE UE.

A RedCap UE may support CE capability (i.e., CE UE) or may not support CE capability (i.e., non-CE UE). In addition, a normal UE may support CE capability, and a RedCap UE may support CE capability. Accordingly, the CE UE may correspond to a normal UE or a RedCap UE.

In this regard, since RedCap UEs or CE UEs are reduced/limited or support different UE capabilities than existing UEs, it is necessary for the base station to initially identify a specific type of UE in a random access process (i.e., RACH process). However, in the case of the prior art, there is a problem in that the base station may not initially identify a RedCap UE or a CE UE in a random access process.

Therefore, in the present disclosure, as described above, when a UE having a specific capability (e.g., CE) or a reduced capability (e.g., RedCap) performs a random access procedure (i.e., RACH procedure) to a wireless network system through one cell, a method of identifying a specific capability or reduced capability of the corresponding UE and completing the RACH procedure appropriately for the corresponding capability will be proposed. Here, the corresponding RACH procedure may be performed for reasons such as initial access, handover, beam failure recovery (BFR), and RRC re-establishment.

The method proposed in the present disclosure may be applied to all UEs or may be applied only to a specific type of UE having a specific or reduced capability. The method proposed in the present disclosure may be used/applied to identify the RedCap UE type and the CE UE type.

In relation to the method proposed in the present disclosure, the base station is configured to different types of UEs to identify a normal UE that is a CE UE, a normal UE that is a non-CE UE, a RedCap UE that is a CE UE, and a RedCap UE that is a non-CE UE. Different UL BWPs may be configured for each, or different PRACH preambles and/or PRACH resources (e.g., PRACH occasions) may be allocated in the same BWP. In addition, if necessary, the base station may configure/define to indicate an additional or specific UE type through MSG3 on the random access procedure.

In the present disclosure, a normal UE that is a CE UE may mean a normal UE that corresponds to a CE UE (i.e., having CE capability), and a normal UE that is a non-CE UE may mean a normal UE that corresponds to a non-CE UE (i.e., non-having CE capability). In addition, a RedCap UE that is a CE UE may mean a RedCap UE corresponding to a CE UE (i.e., having CE capability), and a RedCap UE that is a non-CE UE may mean a RedCap UE corresponding to a non-CE UE (i.e., non-having CE capability).

In addition, in relation to the method proposed in the present disclosure, a UE that is a CE UE may be a UE requesting/requiring msg3 PUSCH repetition, and may be replaced with the following terms.

- A normal UE that is a CE UE is replaced with a normal UE that requires MSG3 PUSCH repetition
- A normal UE that is a non-CE UE is replaced with a normal UE that does not require MSG3 PUSCH repetition
- RedCap UE that is a CE UE, is replaced with a RedCap UE that requires MSG3 PUSCH repetition
- RedCap UE that is a non-CE UE, is replaced with a RedCap UE that does not require MSG3 PUSCH repetition

In addition, it corresponds to a CE UE in terms of UE capability, but may be classified into a CE UE that does not request/require MSG3 PUSCH repetition and a CE UE that requests MSG3 PUSCH repetition. In this case, in the present disclosure, the CE UE may mean both a CE UE not requesting MSG3 PUSCH repetition and a CE UE requesting MSG3 PUSCH repetition, or may mean only a CE UE requesting MSG3 PUSCH repetition.

As mentioned above, in relation to the method proposed in the present disclosure, when the UE perform a RACH procedure in the initial access, handover, Beam Failure Recovery (BFR), RRC Re-establishment scenarios, etc., the base station is necessary to identify the UE type. Regarding corresponding scenarios, a UE may perform a RACH procedure in a specific UL BWP. For example, a specific UL BWP may be an initial UL BWP in the case of an initial access scenario, may be a first active UL BWP in a target cell in the case of a handover scenario, may be a UE active BWP, initial UL BWP, or default UL BWP of the serving cell in the case of a BFR scenario, and may be a initial UL BWP of the cell selected by the UE in the case of an RRC re-establishment scenario.

A base station may or may not support a specific UE type (e.g., normal UE, RedCap UE, CE UE, etc.) in a specific cell. That is, a base station may support all types of UEs or only some types of UEs in a specific cell. For example, a specific cell may support only a UE type combination according to one case among cases of embodiments described later (e.g., embodiments 1 to 5).

In addition, in relation to the method proposed in the present disclosure, a base station may support a separate PRACH partitioning set for a specific UE type. Here, the PRACH partitioning set may mean one, some, or all of separate PRACH resources, separate PRACH preambles, and separate RACH occasions (ROs). A PRACH partitioning set may also be referred to as a PRACH resource set. The base station may transmit configuration information for a separate PRACH partitioning set to the UE(s) through system information block 1 (SIB1) or a specific SIB for a specific UE type.

For convenience of explanation, it is assumed that the 2-step RACH procedure is not configured and the 4-step RACH procedure is configured in the cases of embodiments (e.g., embodiments 1 to 5) to be described later. If the 2-step RACH procedure is configured together with the 4-step RACH procedure, the base station needs to additionally configure a separate PRACH partitioning set for the purpose of the 2-step RACH procedure per BWP.

In addition, in the case of embodiments described later

(e.g., embodiments 1 to 5), it is assumed that the UE is configured to use contention-based RACH (Contention Based RACH, CBRA) in scenarios such as initial access, handover, BFR or RRC re-establishment, or the like.

Embodiment 1

This embodiment relates to a method for performing a RACH procedure in a case where a specific cell supports all of a normal UE that is a CE UE, a normal UE that is a non-CE UE, a RedCap UE that is a CE UE, and a RedCap UE that is a non-CE UE.

In relation to this embodiment, a base station that configures a 4-step RACH procedure without configuring a 2-step RACH procedure may configure a PRACH based on at least one of the following methods (Methods 1a to 1c) for different UE types. In this case, when the number of PRACH partitioning sets per BWP is set to 2, the RACH procedure shall be configured to be performed according to method 1a or method 1c, and method 1b may not be configured. In addition, when the number of PRACH partitioning sets per BWP is set to 4, the RACH procedure shall be configured to be performed according to method 1a or method 1b, and method 1c may not be configured.

(Method 1a)

A method in which the number of PRACH partitioning sets set per BWP is 2 and UEs corresponding to different UE types perform RACH through different UL BWPs may be considered. In this case, when the base station supports four different types of UEs and the number of PRACH partitioning sets is 2, the RedCap UE may be configured to perform initial access through a separate UL BWP.

For example, the base station may configure the UE to perform the RACH procedure as follows.

Normal UEs may be configured to perform initial access through UL BWP #1. At this time, non-CE UEs, which are normal UEs, may perform the RACH procedure using PRACH partitioning set #1 of UL BWP #1, and CE UEs, which are RedCap UEs, may perform the RACH procedure using PRACH partitioning set #2 of UL BWP #1.

RedCap UEs may be configured to perform initial access through UL BWP #2. At this time, non-CE UEs, which are RedCap UEs may perform the RACH procedure using PRACH partitioning set #1 of UL BWP #2, and CE UEs, which are RedCap UEs may perform the RACH procedures using PRACH partitioning set #2 of UL BWP #2.

(Method 1b)

A method in which the number of PRACH partitioning sets configured per BWP is 4 and UEs corresponding to different UE types perform RACH through the same UL BWP may be considered. In this case, when the base station supports four different types of UEs and the number of PRACH partitioning sets is 4, the RedCap UE may be configured to perform initial access through a separate PRACH resource without a separate UL BWP.

For example, the base station may configure the UE to perform the RACH procedure as follows.

Non-CE UEs, which are normal UEs, may perform RACH procedures using PRACH partitioning set #1 of UL BWP #1, and CE UEs, which are RedCap UEs, may perform RACH procedures using PRACH partitioning set #2 of UL BWP #1.

Non-CE UEs, which are RedCap UEs may perform RACH procedures using PRACH partitioning set #3 of UL BWP #1, and CE UEs, which are RedCap UEs may perform RACH procedures using PRACH partitioning set #4 of UL BWP #1.

(Method 1c)

A method in which a RedCap UE, which is a CE UE, and a RedCap UE, which is a non-CE UE, perform an RACH procedure using the same specific PRACH partitioning set may be considered.

In this method, the base station may configure the specific PRACH partitioning set for CE-dedicated. In this way, when the base station provides a CE-dedicated PRACH partitioning set without a separate PRACH partitioning set for the RedCap UE, the RedCap UE may always transmit the PRACH using the CE-dedicated PRACH partitioning set regardless of CE or not. That is, all RedCap UEs may transmit MSG1 through the PRACH resource of the CE-dedicated PRACH partitioning set and the PRACH preamble.

In addition, a normal UE that is a CE UE may also transmit a PRACH using a CE-dedicated PRACH partitioning set. However, a normal UE that is a non-CE UE may transmit a PRACH using a PRACH partitioning set other than CE-dedicated.

When the UE receives MSG2 (i.e., RAR) including the response to MSG1 described above, the RedCap UE may transmit MSG3 through PUSCH according to the UL grant included in MSG2. In this case, the MSG3 PUSCH transmission parameter value for CE and the MSG3 PUSCH transmission parameter value for non-CE may be different based on the configuration of the base station. Accordingly, a RedCap UE, which is a CE UE, may transmit MSG3 PUSCH based on parameters for CE purposes, and a RedCap UE, which is a non-CE UE, may transmit MSG3 PUSCH based on parameters for non-CE purposes. In addition, when the PUSCH repetition is set to 4 for the CE UE, the CE UE may repeatedly performs PUSCH transmission carrying MSG3 4 times, but the non-CE UE may perform PUSCH transmission only once and then may skip the remaining PUSCH transmissions. Therefore, the base station considers both the CE UE and the non-CE UE and may (downlink) transmit a UL grant for retransmission for PUSCH transmission or a contention resolution MAC-CE for each UE type.

In addition, when the base station is configured to SIB or the like, the UE may transmit/indicate information on whether the UE transmitting MSG3 is a RedCap UE or a normal UE through MSG3 to the base station. Additionally, the corresponding UE may transmit/indicate information on whether the UE is a CE UE or a non-CE UE to the base station.

For example, such transfer/indication may be included in a header or sub-header of the MAC PDU for MSG3. As a specific example, a logical channel ID (LCID) field may be included in the subheader of the MAC PDU for MSG3, and a specific value of the corresponding LCID field is applicable to three UE types (i.e., [normal UE that is a CE UE], [RedCap UE that is a CE UE], and [RedCap UE that is a non-CE UE]), or may indicate a RedCap UE.

If it is configured to indicate one of the three types of UEs, but the MSG3 received by the base station does not indicate one of the three types of UEs, the base station may identify that the UE transmitting MSG3 corresponds to a normal UE, which is a non-CE UE. Alternatively, if it is configured to indicate that it is a RedCap UE, but the MSG3 received by the base station does not indicate that it is a RedCap UE, the base station may identify that the UE transmitting MSG3 corresponds to a normal UE. In this case, the base station may identify whether it is a normal UE that is a CE UE or a normal UE that is a non-CE UE, according to the PRACH partitioning set to which MSG1 was transmitted.

Embodiment 2

This embodiment relates to a method for performing an RACH procedure in a case where a specific cell supports a normal UE that is a CE UE, a normal UE that is a non-CE UE, and a RedCap UE that is a non-CE UE. That is, this embodiment corresponds to a case where a RedCap UE, which is a CE UE, is not supported in a specific cell.

In this case, the base station may configure/indicate to barred the RedCap terminaUE, which is the CE UE, in the corresponding cell. The configuration/indication information for this may be included in SIB1 information of the corresponding cell or may be included in DCI scheduling SIB1.

In relation to this embodiment, a base station that configures a 4-step RACH procedure without configuring a 2-step RACH procedure may configured a PRACH based on at least one of the following methods (methods 2a and 2b) for different UE types. In this case, when the number of PRACH partitioning sets per BWP is set to 2, the RACH procedure shall be configured to be performed according to method 2a, and method 2b may not be configured. In addition, when the number of PRACH partitioning sets per BWP is set to 3, the RACH procedure shall be configured to be performed according to method 2b, and method 2a may not be configured.

(Method 2a)

A method of configuring a separate UL BWP for a RedCap UE may be considered. In this method, a normal UE and a RedCap UE, which is a non-CE UE, may be configured to perform RACH in a separate UL BWP.

For example, a normal UE that is a non-CE UE may transmit PRACH using PRACH partitioning set #1 of UL BWP #1, and a normal UE that is a CE UE may transmit PRACH using PRACH partitioning set #2 of UL BWP #1. On the other hand, a RedCap UE that is a non-CE UE may transmit PRACH using PRACH partitioning set #1 of UL BWP #2. In this case, the base station may identify the UE type through the UL BWP and PRACH partitioning set.

(Method 2b)

A method of not configuring a separate UL BWP for a RedCap UE may be considered. In this scheme, a normal UE and a RedCap UE, which is a non-CE UE, may be configured to perform RACH in the same UL BWP.

For example, a normal UE that is a non-CE UE may transmit PRACH using PRACH partitioning set #1 of UL BWP #1, and a normal UE that is a CE UE may transmit PRACH using PRACH partitioning set #2 of UL BWP #1. In addition, a RedCap UE that is a non-CE UE may transmit PRACH using PRACH partitioning set #3 of UL BWP #1. In this case, the base station may identify the UE type only through the PRACH partitioning set.

Embodiment 3

This embodiment relates to a method of performing an RACH procedure in a case where a specific cell supports a normal UE, which is a non-CE UE, and a RedCap UE, which is a non-CE UE. In other words, this embodiment corresponds to a case where a normal UE, which is a CE UE, and a RedCap UE, which is a CE UE, are not supported in a specific cell.

This embodiment relates to a method for performing an RACH procedure in a case where a specific cell supports a normal UE that is a CE UE, a normal UE that is a non-CE UE, and a RedCap UE that is a non-CE UE. That is, this embodiment corresponds to a case where a RedCap UE, which is a CE UE, is not supported in a specific cell.

In this case, the base station may configure/indicate to barred the CE UE in the corresponding cell. The configuration/indication information for this may be included in SIB1 information of the corresponding cell or may be included in DCI scheduling SIB1.

In relation to this embodiment, a base station that configures a 4-step RACH procedure without configuring a 2-step RACH procedure may configure a PRACH based on at least one of the following methods (methods 3a and 3b) for different UE types. In this case, when the number of PRACH partitioning sets per BWP is set to 1, the RACH procedure shall be configured to be performed according to method 3a, and method 3b may not be configured. In addition, when the number of PRACH partitioning sets per BWP is set to 2, the RACH procedure shall be configured to be performed according to method 3b, and method 3a may not be configured.

(Method 3a)

A method of configuring a separate UL BWP for a RedCap UE may be considered. In this method, a normal UE and a RedCap UE corresponding to a non-CE UE may be configured to perform RACH in a separate UL BWP.

For example, a normal UE, which is a non-CE UE, may transmit PRACH using the PRACH partitioning set of UL BWP #1, and a RedCap UE, which is a non-CE UE, may transmit PRACH using the PRACH partitioning set of UL BWP #2. In this case, the base station may identify the UE type through UL BWP.

(Method 3b)

A method of not configuring a separate UL BWP for a RedCap UE may be considered. In this scheme, a normal UE corresponding to a non-CE UE and a RedCap UE may be configured to perform RACH in the same UL BWP.

For example, a normal UE that is a non-CE UE may transmit PRACH using PRACH partitioning set #1 of UL BWP #1, and a RedCap UE that is a non-CE UE may transmit PRACH using PRACH partitioning set #2 of UL BWP #1. In this case, the base station may identify the UE type only through the PRACH partitioning set.

Embodiment 4

This embodiment relates to a method of performing an RACH procedure in a case where a specific cell supports a normal UE that is a non-CE UE, a RedCap UE that is a CE UE, and a RedCap UE that is a non-CE UE. That is, this embodiment corresponds to a case in which a normal UE, which is a CE UE, is not supported in a specific cell.

In this case, the base station may configure/indicate to barred a normal UE that is a CE UE in the corresponding cell. The configuration/indication information for this may be included in SIB1 information of the corresponding cell or may be included in DCI scheduling SIB1.

In relation to this embodiment, a base station that configures a 4-step RACH procedure without configuring a 2-step RACH procedure may configure a PRACH based on at least one of the following methods (methods 4a and 4b) for different UE types PRACH. In this case, when the number of PRACH partitioning sets per BWP is set to 2, the RACH procedure shall be configured to be performed according to method 4a, and method 4b may not be configured. In addition, when the number of PRACH partitioning sets per BWP is set to 3, the RACH procedure shall be configured to be performed according to method 4b, and method 4a may not be configured.

(Method 4a)

A method of configuring a separate UL BWP for a RedCap UE may be considered. In this method, a RedCap UE and a normal UE, which is a non-CE UE, may be configured to perform RACH in a separate UL BWP.

For example, a normal UE that is a non-CE UE may transmit a PRACH using a PRACH partitioning set of UL BWP #1. On the other hand, RedCap UE, which is a non-CE UE, may transmit PRACH using PRACH partitioning set #1 of UL BWP #2, and RedCap UE, which is a CE UE, may transmit PRACH using PRACH partitioning set #2 of UL BWP #2. In this case, the base station may identify the UE type through the UL BWP and PRACH partitioning set.

(Method 4b)

A method of configuring a separate UL BWP for a RedCap UE may be considered. In this scheme, all UEs may be configured to perform RACH in the same UL BWP.

For example, a normal UE that is a non-CE UE may transmit PRACH using PRACH partitioning set #1 of UL BWP #1. In addition, RedCap UE, which is a non-CE UE, may transmit PRACH using PRACH partitioning set #2 of UL BWP #1, and RedCap UE, which is a CE UE, may transmit PRACH using PRACH partitioning set #3 of UL BWP #1. In this case, the base station may identify the UE type only through the PRACH partitioning set.

Embodiment 5

This embodiment relates to a method of performing an RACH procedure in a case where a specific cell supports a normal UE that is a CE UE, a normal UE that is a non-CE UE, and a RedCap UE that is a CE UE. That is, this embodiment corresponds to a case where a RedCap UE, which is a non-CE UE, is not supported in a specific cell.

In this case, the base station may configure/indicate to barred a RedCap UE that is a non-CE UE in a corresponding cell. The configuration/indication information for this may be included in SIB1 information of the corresponding cell or may be included in DCI scheduling SIB1.

In relation to this embodiment, a base station that configures a 4-step RACH procedure without configuring a 2-step RACH procedure may configure a PRACH based on at least one of the following methods (methods 5a to 5c) for different UE types PRACH. In this case, when the number of PRACH partitioning sets per BWP is set to 2, the RACH procedure shall be configured to be performed according to method 5a, and method 5b may not be configured. In addition, when the number of PRACH partitioning sets per BWP is set to 3, the RACH procedure shall be configured to be performed according to method 5b, and method 5a may not be configured.

(Method 5a)

A method of configuring a separate UL BWP for a RedCap UE may be considered. In this scheme, a normal UE and a RedCap UE, which is a non-CE UE, may be configured to perform RACH in a separate UL BWP.

For example, a normal UE that is a non-CE UE may transmit PRACH using PRACH partitioning set #1 of UL BWP #1, and a normal UE that is a CE UE may transmit PRACH using PRACH partitioning set #2 of UL BWP #1. can transmit. On the other hand, a RedCap UE that is a CE UE may transmit PRACH using PRACH partitioning set #1 of UL BWP #2. In this case, the base station may identify the UE type through the UL BWP and PRACH partitioning set.

(Method 5b)

A method of configuring a separate UL BWP for a RedCap UE may be considered. In this scheme, a normal UE and a RedCap UE, which is a non-CE UE, may be configured to perform RACH in the same UL BWP.

For example, a normal UE that is a non-CE UE may transmit PRACH using PRACH partitioning set #1 of UL BWP #1, and a normal UE that is a CE UE may transmit PRACH using PRACH partitioning set #2 of UL BWP #1. In addition, a RedCap UE that is a CE UE may transmit PRACH using PRACH partitioning set #3 of UL BWP #1. In this case, the base station may identify the UE type only through the PRACH partitioning set.

(Method 5c)

A method in which both a normal UE, which is a CE UE, and a RedCap UE, which is a CE UE, perform an RACH procedure using the same specific PRACH partitioning set may be considered.

In this method, the base station may configure the specific PRACH partitioning set for CE-dedicated. As such, when the base station provides a CE-dedicated PRACH partitioning set without a separate PRACH partitioning set for the RedCap UE, the normal UE, which is a CE UE, and the RedCap UE, which is a CE UE, may always transmit PRACH using the CE-dedicated PRACH partitioning set. That is, when CE is supported, both the normal UE and the RedCap UE may transmit MSG1 through the PRACH resource of the CE-dedicated PRACH partitioning set and the PRACH preamble.

In addition, a normal UE that is a CE UE may also transmit a PRACH using a CE-dedicated PRACH partitioning set. However, a normal UE that is a non-CE UE may transmit a PRACH using a PRACH partitioning set other than CE-dedicated.

When the UE receives MSG2 (i.e., RAR) including the response to MSG1 described above, the RedCap UE may transmit MSG3 through PUSCH according to the UL grant included in MSG2. In this case, the MSG3 PUSCH transmission parameter value for CE and the MSG3 PUSCH transmission parameter value for non-CE may be different based on the setting of the base station. Accordingly, the CE UE may transmit the MSG3 PUSCH based on the CE purpose parameter, and the non-CE UE may transmit the MSG3 PUSCH based on the non-CE purpose parameter. In addition, when the PUSCH repetition is set to 4 for the CE UE, the CE UE may repeatedly perform PUSCH transmission carrying MSG3 4 times, but the non-CE UE may perform PUSCH transmission only once and then may skip the remaining PUSCH transmissions. Therefore, the base station may consider both the CE UE and the non-CE UE and may (downlink) transmit a UL grant for retransmission for PUSCH transmission or a contention resolution MAC-CE for each UE type.

In addition, when the base station configure SIB or the like, the UE may transmit/indicate information onabout whether the UE transmitting MSG3 is a RedCap UE or a normal UE through MSG3 to the base station. Additionally, the corresponding UE may transmit/indicate information on whether the UE is a CE UEterminal or a non-CE UE to the base station.

For example, such transfer/indication may be included in a header or sub-header of the MAC PDU for MSG3. As a specific example, a logical channel ID (LCID) field may be included in the subheader of the MAC PDU for MSG3, and a specific value of the LCID field may be used for two UE types (i.e., [normal UE that is a CE UE] and [RedCap UE that is a CE UE]), or may indicate a RedCap UE.

If it is configured to indicate one of the two UE types, but the MSG3 received by the base station does not indicate one of the two UE types, the base station may identify that a UE transmitting MSG3 corresponds to a normal UE that is a non-CE UE. Alternatively, if it is configuredset to indicate that it is a RedCap UE, but the MSG3 received by the base station does not indicate that it is a RedCap UE, the base station may identify that the UE transmitting MSG3 corresponds to a normal UE. In this case, the base station may identify whether the MSG1 is a normal UE that is a CE UE or a normal UE that is a non-CE UE according to the transmitted PRACH partitioning set.

In addition, in relation to the embodiments described above in the present disclosure, the UE may perform/use a contention free RACH (CFRA) procedure in scenarios such as initial access, handover, BFR or RRC re-establishment, or the like. In this case, the UE may perform the RACH procedure based on the following methods (Methods 1 to 3). The methods described below are described on the assumption that the UE performs a CFRA procedure, but the corresponding methods may be partially extended and applied even when the UE performs a CBRA procedure (e.g., the above-described embodiments of the present disclosure).

(Method 1. A method for performing RACH procedure in a handover scenario)

The target base station (e.g., target gNB) may transmit a handover command message to the UE through the source base station (e.g., source gNB). Here, the target base station may refer to the base station on which the UE performs handover, and the source base station may refer to a base station with which the UE currently performs uplink and downlink transmission and reception (i.e., before handover is completed).

At this time, the handover command message may include information on a dedicated preamble dedicated to the UE. In addition, if the UE in question is a RedCap UE that is a CE UE, a RedCap UE that is a non-CE UE, or a normal UE that is a CE UE, according to the above-described embodiments (Embodiments 1 to 5) and detailed methods within the embodiment, the base station may determine a specific UL BWP configuration (e.g., UL BWP #2) and a specific PRACH partitioning set configuration (e.g., PRACH partitioning set #2) suitable for the UE type, and may transmit the determined configurations to the corresponding UE through a handover command message.

Additionally, the handover command message may include cell level PRACH configuration information of the target cell. In this case, the UE may also acquire other PRACH partitioning set configurations of other UL BWPs (e.g., PRACH partitioning set #1 of UL BWP #1), in addition to the specific PRACH partitioning set configurations described above through the handover command message.

The UE, which has received the specific UL BWP configuration and the specific PRACH partitioning set configuration along with information on the dedicated preamble dedicated to the UE through the above-described handover command message, may perform the RACH procedure in the target cell as follows.

When the UE receives information on the dedicated preamble dedicated to the UE, the UE checks whether the measurement quality (e.g. RSRP, etc.) for the SSB index and/or the CSI-RS resource of the target cell mapped to the dedicated preamble is greater than or equal to the threshold set/indicated by the base station. If the measurement quality is greater than or equal to the threshold, the UE may perform PRACH transmission using the dedicated preamble in the UL BWP to which the dedicated preamble corresponds.

On the other hand, when the measurement quality for the SSB index and/or CSI-RS resource of the target cell mapped to the dedicated preamble during RACH procedure is less than (or equal to) the threshold set/indicated by the base station, the UE may perform PRACH transmission as follows. As an example, when the UE receives a specific UL BWP configuration (e.g., UL BWP #2) and/or a specific PRACH partitioning set configuration (e.g., PRACH partitioning set #2) from the base station, the UE may perform PRACH transmission in UL BWP #2 using PRACH partitioning set #2 of UL BWP #2. As another example, the UE did not receive a specific UL BWP configuration or a specific PRACH partitioning set configuration from the base station, or the measurement quality for the SSB index and/or CSI-RS resource of the target cell mapped to the PRACH preamble of a specific PRACH partitioning set received from the base station may be less than (or equal to) the threshold set/indicated by the base station. In this case, the UE may perform PRACH transmission in UL BWP #1 using PRACH partitioning set #1 of UL BWP #1, according to a different PRACH partitioning set configuration in a different UL BWP (e.g. PRACH partitioning set #1 in UL BWP #1).

(Method 2. A method for performing RACH procedure in a BFR scenario)

The base station may allocate a dedicated preamble for UE-dedicated for BFR to a specific UE in case a beam failure occurs. If the UE has received a specific PRACH partitioning set configuration in a specific UL BWP for BFR from the base station through BFR configuration information (e.g., beamFailureRecoveryConfig), the UE may perform the RACH procedure in the serving cell as follows when detecting beam failure.

RedCap-specific initial UL BWP may be configured through BFR configuration information for the RedCap UE (e.g., RedCap specific beamFailureRecoveryConfig). In this case, the RedCap UE may use the active BWP of a RedCap-specific UE to perform the RACH procedure in the target cell. Additionally, a RedCap-specific BFR timer (e.g., RedCap specific beamFailureRecoveryTimer) may be configured through BFR configuration information for the RedCap UE. Additionally, through BFR configuration information for the RedCap UE, RedCap-specific PRACH resources and/or PRACH preamble may be configured for the active BWP of the UE.

When the UE receives information on the dedicated preamble dedicated to the UE, the UE checks whether the measurement quality (e.g. RSRP, etc.) for the SSB index and/or the CSI-RS resource of the target cell mapped to the dedicated preamble is greater than or equal to the threshold set/indicated by the base station. If the measurement quality is greater than or equal to the threshold, the UE may perform PRACH transmission using the dedicated preamble in the UL BWP to which the dedicated preamble corresponds.

On the other hand, when the measurement quality for the SSB index and/or CSI-RS resource of the target cell mapped to the dedicated preamble during RACH procedure is less than (or equal to) the threshold set/indicated by the base station, the UE may perform PRACH transmission as follows. As an example, when the UE receives a specific UL BWP configuration (e.g., UL BWP #2) and/or a specific PRACH partitioning set configuration (e.g., PRACH partitioning set #2) from the base station, the UE may perform PRACH transmission in UL BWP #2 using PRACH partitioning set #2 of UL BWP #2. As another example, the UE did not receive a specific UL BWP configuration or a specific PRACH partitioning set configuration from the base station, or the measurement quality for the SSB index and/or CSI-RS resource of the target cell mapped to the PRACH preamble of a specific PRACH partitioning set received from the base station may be less than (or equal to) the threshold set/indicated by the base station. In this case, the UE may perform PRACH transmission in UL BWP #1 using PRACH partitioning set #1 of UL BWP #1, according to a different PRACH partitioning set configuration in a different UL BWP (e.g. PRACH partitioning set #1 in UL BWP #1).s

(Method 3. A method for performing RACH procedure in a RRC re-establishment scenario)

If a radio link failure (RLF) is detected in the sserving cell, the UE may trigger an RRC re-establishment procedure. Here, it may be assumed that the UE is in connected mode with the base station.

In this case, the UE may select the current cell or a new cell and perform the RACH procedure in the selected cell according to the SIB1 information of the selected cell. At this time, SIB1 may be SIB1 in NR Rel-15/16, or a separate SIB1 or separate SIB to support a specific UE type.

If the UE receives a specific UL BWP configuration (e.g., UL BWP #2) and/or a specific PRACH partitioning set configuration (e.g., PRACH partitioning set #2) for a specific UE type corresponding to the UE, from SIB1 of the cell selected by the UE, the UE may perform PRACH transmission in UL BWP #2 using PRACH partitioning set #2 of UL BWP #2.

Alternatively, the UE did not receive a specific UL BWP configuration and/or a specific PRACH partitioning set configuration for a specific UE type from SIB1 of the selected cell, or the measurement quality for the SSB index and/or CSI-RS resource of the serving cell mapped to the PRACH preamble of a specific PRACH partitioning set received from the base station may be less than (or equal to) the threshold set/indicated by the base station. In this case, the UE may perform PRACH transmission using PRACH partitioning set #1 of UL BWP #1 in UL BWP #1, according to a different PRACH partitioning set configuration of a different UL BWP (e.g., PRACH partitioning set #1 of UL BWP #1).

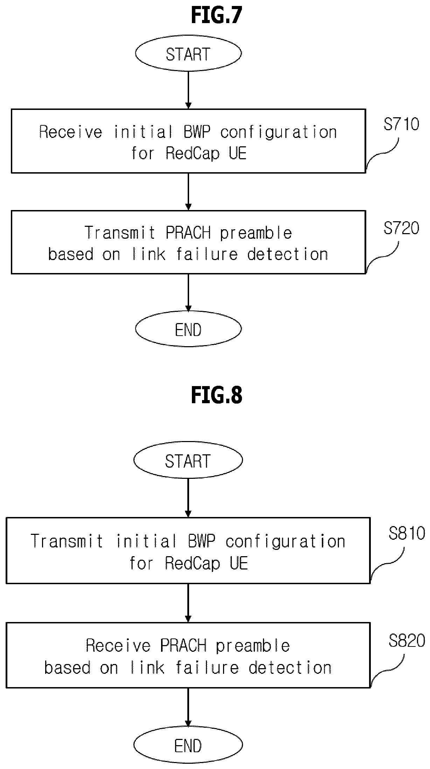

FIG. 7 is a diagram illustrating the operation of a UE for a method of performing a random access procedure according to an embodiment of the present disclosure.

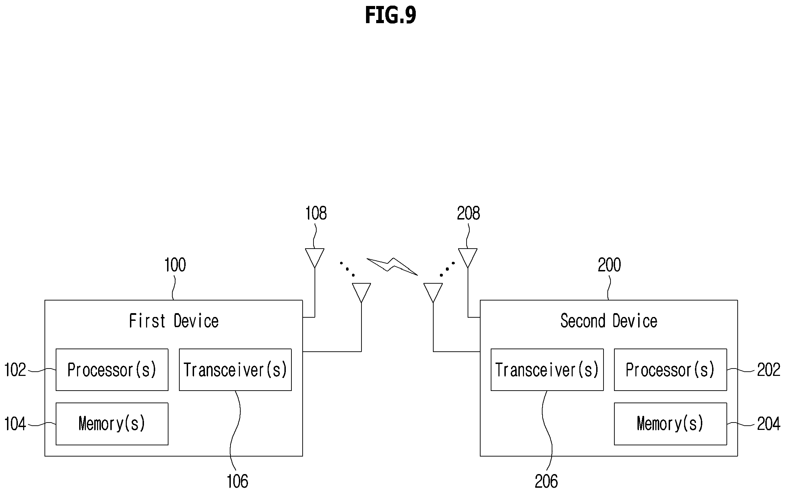

FIG. 7 illustrates the operation of a UE based on the previously proposed method (eg, any one or a combination of embodiments 1 to 5 and detailed embodiments thereof). The example in FIG. 7 is for convenience of explanation and does not limit the scope of the present disclosure. Some step(s) illustrated in FIG. 7 may be omitted depending on the situation and/or setting. Additionally, the UE in FIG. 7 is only an example and may be implemented as a device illustrated in FIG. 9 below. For example, the processor 102/202 of FIG. 9 may control to transmit and receive channel/signal/data/information, etc. (e.g., RRC signaling, MAC CE, DCI for UL/DL scheduling, SRS, PDCCH, PDSCH, PUSCH, PUCCH, etc.) using the transceiver 106/206, and may control to store transmitted or received channels/signals/data/information, etc. in the memory 104/204.

In step S710, the UE may receive configuration information on the initial bandwidth part (initial BWP) for a UE with reduced capability (e.g., RedCap UE) from the base station.

For example, as in the embodiments described above (e.g., Embodiments 1 to 5, and related example methods), the UE may receive a BWP configuration for a specific UE type (e.g., RedCap UE, CE UE, etc.) from the base station. Here, the BWP configuration may include an initial BWP configuration. Additionally, the BWP configuration may be configured through a separate message from the BWP configuration for a normal UE, or may be configured together through a single message.

In step S720, if link failure is detected, the UE may transmit the PRACH preamble to the base station in the initial BWP described above. Here, if the initial BWP is associated with one or more PRACH resource sets (e.g., the PRACH partitioning set described above, etc.), the PRACH preamble may be transmitted in a PRACH resource set related to the above-described reduced capability (e.g., RedCap) among the one or more PRACH resource sets.

For example, as in the embodiments described above (e.g., Embodiments 1 to 5, and related example methods), a configuration for one or more PRACH resource sets described above may include individual configurations for PRACH resource sets related to the reduced capability described above. Here, the PRACH resource sets related to the reduced capability may include a PRACH resource and/or a RACH occasion for the reduced capability, etc. Additionally, the preamble may be configured for a UE with the reduced capability (e.g., for RedCap UE-dedicated).

In addition, for example, the link failure may correspond to a link failure detected in RRC connected mode between the UE and the base station. As a specific example, the link failure may be at least one of radio link failure (RLF) or beam failure (BF).

If the link failure corresponds to a radio link failure, the PRACH preamble may correspond to a PRACH preamble configured being related to (/in connection with) recovery of a radio link failure (e.g., dedicated for RLF recovery purposes). At this time, if the signal quality (e.g., RSRP value) for the downlink signal (e.g., SSB, CSI-RS, etc.) associated with the PRACH preamble is less than or equal to the threshold set by the base station, the corresponding PRACH preamble may be transmitted in a different bandwidth part configured for the UE (e.g., a BWP other than the initial BWP for the RedCap UE).

Alternatively, if the link failure corresponds to a beam failure, the PRACH preamble may correspond to a PRACH preamble configured being related to (/in connection with) recovery of beam failure (e.g., dedicated for BFR purposes). At this time, if the signal quality (e.g., RSRP value) for the downlink signal (e.g., SSB, CSI-RS, etc.) related to the PRACH preamble is less than or equal to the threshold set by the base station, the corresponding PRACH preamble may be transmitted in a different bandwidth part configured for the UE (e.g., a BWP other than the initial BWP for the RedCap UE). Additionally, the PRACH resource set related to the reduced capability may be configured by the base station through configuration information related to beam failure recovery (e.g., BFR-related Config).

FIG. 8 is a diagram illustrating the operation of a base station for a method of performing a random access procedure according to an embodiment of the present disclosure.

FIG. 8 illustrates the operation of a UE based on the previously proposed method (eg, any one or a combination of embodiments 1 to 5 and detailed embodiments thereof). The example in FIG. 8 is for convenience of explanation and does not limit the scope of the present disclosure. Some step(s) illustrated in FIG. 8 may be omitted depending on the situation and/or setting. Additionally, the base station in FIG. 8 is only an example and may be implemented as a device illustrated in FIG. 9 below. For example, the processor 102/202 of FIG. 9 may control to transmit and receive channel/signal/data/information, etc. (e.g., RRC signaling, MAC CE, DCI for UL/DL scheduling, SRS, PDCCH, PDSCH, PUSCH, PUCCH, etc.) using the transceiver 106/206, and may control to store transmitted or received channels/signals/data/information, etc. in the memory 104/204.

In step S810, the base station may transmit configuration information on the initial bandwidth part (initial BWP) for a UE with reduced capability (e.g., RedCap UE) to a UE.

For example, as in the embodiments described above (e.g., Embodiments 1 to 5, and related example methods), the base station may transmit a BWP configuration for a specific UE type (e.g., RedCap UE, CE UE, etc.) to the UE. Here, the BWP configuration may include an initial BWP configuration. Additionally, the BWP configuration may be configured through a separate message from the BWP configuration for a normal UE, or may be configured together through a single message.

In step S820, if link failure is detected, the base station may receive the PRACH preamble from the UE in the initial BWP described above. Here, if the initial BWP is associated with one or more PRACH resource sets (e.g., the PRACH partitioning set described above, etc.), the PRACH preamble may be transmitted in a PRACH resource set related to the above-described reduced capability (e.g., RedCap) among the one or more PRACH resource sets.

For example, as in the embodiments described above (e.g., Embodiments 1 to 5, and related example methods), a configuration for one or more PRACH resource sets described above may include individual configurations for PRACH resource sets related to the reduced capability described above. Here, the PRACH resource sets related to the reduced capability may include a PRACH resource and/or a RACH occasion for the reduced capability, etc. Additionally, the preamble may be configured for a UE with the reduced capability (e.g., for RedCap UE-dedicated).

In addition, for example, the link failure may correspond to a link failure detected in RRC connected mode between the UE and the base station. As a specific example, the link failure may be at least one of radio link failure (RLF) or beam failure (BF).

If the link failure corresponds to a radio link failure, the PRACH preamble may correspond to a PRACH preamble configured being related to (/in connection with) recovery of a radio link failure (e.g., dedicated for RLF recovery purposes). At this time, if the signal quality (e.g., RSRP value) for the downlink signal (e.g., SSB, CSI-RS, etc.) associated with the PRACH preamble is less than or equal to the threshold set by the base station, the corresponding PRACH preamble may be transmitted in a different bandwidth part configured for the UE (e.g., a BWP other than the initial BWP for the RedCap UE).

Alternatively, if the link failure corresponds to a beam failure, the PRACH preamble may correspond to a PRACH preamble configured being related to (/in connection with) recovery of beam failure (e.g., dedicated for BFR purposes). At this time, if the signal quality (e.g., RSRP value) for the downlink signal (e.g., SSB, CSI-RS, etc.) related to the PRACH preamble is less than or equal to the threshold set by the base station, the corresponding PRACH preamble may be transmitted in a different bandwidth part configured for the UE (e.g., a BWP other than the initial BWP for the RedCap UE). Additionally, the base station may configure the PRACH resource set related to the reduced capability to the UE, through configuration information related to beam failure recovery (e.g., BFR-related Config).

General Device to which the Present Disclosure may be applied

FIG. 9 illustrates a block diagram of a wireless communication device according to an embodiment of the present disclosure.

In reference to FIG. 9, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202.

Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device XXX, YYY of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device XXX, YYY of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for performing random access by a UE in a wireless communication system, the method comprising:

   receiving, from a base station, configuration information for an initial bandwidth part (BWP) for a UE with reduced capability; and
   transmitting, to the base station, a physical random access channel (PRACH) preamble in the initial BWP based on detecting a link failure;
   wherein, based on the initial BWP being associated with one or more PRACH resource sets, the PRACH preamble is transmitted in a PRACH resource set related to the reduced capability among the one or more PRACH resource sets.

2. The method of claim 1,
   wherein the link failure is detected in a Radio Resource Control (RRC) connected mode between the UE and the base station.

3. The method of claim 1,

   wherein a configuration for the one or more PRACH resource sets includes individual configurations for the PRACH resource set related to the reduced capability, and
   wherein the PRACH resource set related to the reduced capability includes at least one of a PRACH resource or RACH occasion for the reduced capability.

4. The method of claim 1,
   wherein the link failure corresponds to at least one of radio link failure or beam failure.

5. The method of claim 4,
   wherein, based on the link failure corresponding to the radio link failure, the PRACH preamble corresponds to a PRACH preamble configured being related to recovery of the radio link failure.

6. The method of claim 5, further comprising:
   based on a signal quality of a downlink signal associated with the PRACH preamble being less than or equal to a threshold configured by the base station, transmitting a PRACH preamle in other BWP configured for the UE.

7. The method of claim 4,
   wherein, based on the link failure corresponding to the beam failure, the PRACH preamble corresponds ro a PRACH preamble configured being related to recovery of the beam failure.

8. The method of claim 4,
   wherein, based on the link failure corresponding to the beam failure, the PRACH resource set related to the reduced capability is configured by the base station, through configuration information related to beam failure recovery.

9. The method of claim 8, further comprising:
   based on a signal quality of a downlink signal associated with the PRACH preamble being less than or equal to a threshold configured by the base station, transmitting a PRACH preamle in other BWP configured for the UE.

10. The method of claim 1,
    wherein the PRACH preamble is configured for the UE with reduced capability.

11. A UE of performing random access in a wireless communication system, the UE comprising:

    at least one transceiver for transmitting and receiving a wireless signal; and
    at least one processor for controlling the at least one transceiver,
    wherein the at least one processor configured to:

    receive, from a base station, configuration information for an initial bandwidth part (BWP) for a UE with reduced capability; and
    transmit, to the base station, a physical random access channel (PRACH) preamble in the initial BWP based on detecting a link failure;
    wherein, based on the initial BWP being associated with one or more PRACH resource sets, the PRACH preamble is transmitted in a PRACH resource set related to the reduced capability among the one or more PRACH resource sets.

12. A method for performing random access by a base station in a wireless communication system, the method comprising:

    transmitting, to a user equipment (UE), configuration information for an initial bandwidth part (BWP) for a UE with reduced capability; and
    receiving, from the UE, a physical random access channel (PRACH) preamble in the initial BWP based on detecting a link failure;
    wherein, based on the initial BWP being associated with one or more PRACH resource sets, the PRACH preamble is transmitted in a PRACH resource set related to the reduced capability among the one or more PRACH resource sets.

13. A base station of performing random access in a wireless communication system, the base station comprising:

    at least one transceiver for transmitting and receiving a wireless signal; and
    at least one processor for controlling the at least one transceiver,
    wherein the at least one processor configured to:

    transmit, to a user equipment (UE), configuration information for an initial bandwidth part (BWP) for a UE with reduced capability; and
    receive, from the UE, a physical random access channel (PRACH) preamble in the initial BWP based on detecting a link failure;
    wherein, based on the initial BWP being associated with one or more PRACH resource sets, the PRACH preamble is transmitted in a PRACH resource set related to the reduced capability among the one or more PRACH resource sets.

14. A processing apparatus configured to control a UE for performing random access in a wireless communication system, the processing apparatus comprising:

at least one processor; and
at least one computer memory operably connected to the at least one processor and storing instructions that, based on being executed by the at least one processor, perform operations comprising:

receiving, from a base station, configuration information for an initial bandwidth part (BWP) for a UE with reduced capability; and
transmitting, to the base station, a physical random access channel (PRACH) preamble in the initial BWP based on detecting a link failure;
wherein, based on the initial BWP being associated with one or more PRACH resource sets, the PRACH preamble is transmitted in a PRACH resource set related to the reduced capability among the one or more PRACH resource sets.

15. At least one non-transitory computer-readable medium storing at least one instruction, wherein the at least one instruction executable by at least one processor controls a device of performing random access in a wireless communication system to:

receive, from a base station, configuration information for an initial bandwidth part (BWP) for a UE with reduced capability; and
transmit, to the base station, a physical random access channel (PRACH) preamble in the initial BWP based on detecting a link failure;
wherein, based on the initial BWP being associated with one or more PRACH resource sets, the PRACH preamble is transmitted in a PRACH resource set related to the reduced capability among the one or more PRACH resource sets.

# FIG.1

AMF/UPF

AMF/UPF

NGC

NG-C/U

NG-C/U

NG-C/U

NG-C/U

Xn

gNB

gNB

NG-RAN

Xn

Xn

gNB

# FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

Resource grid

A carrier
(up to 3300 subcarriers, i.e., 275 RBs)

A BWP

1 RB=12 subcarrier

1 RE

1 subcarrier

1 Symbol

k=0

l=0 ‥‥

**FIG.6**

INITIAL CELL SEARCH

PSS/SSS& [DLRS]& PBCH — S601

SYSTEM INFORMATION RECEPTION

PDCCH/ PDSCH (BCCH) — S602

RANDOM ACCESS PROCEDURE

PRACH — S603

PDCCH/ PDSCH — S604

PUSCH — S605

PDCCH/ PDSCH — S606

GENERAL DL/UL Tx/Rx

PDCCH/ PDSCH — S607

PUSCH/ PUCCH — S608

· DL/UL ACK/NACK
· UE CQI/PMI RI REPORT
  USING PUSCH AND PUCCH

# FIG.7

START

Receive initial BWP configuration
for RedCap UE — S710

Transmit PRACH preamble
based on link failure detection — S720

END

# FIG.8

START

Transmit initial BWP configuration
for RedCap UE — S810

Receive PRACH preamble
based on link failure detection — S820

END

# FIG.9

## INTERNATIONAL SEARCH REPORT

International application No.

**PCT/KR2022/011620**

### A.    CLASSIFICATION OF SUBJECT MATTER

**H04W 74/08**(2009.01)i; **H04W 74/00**(2009.01)i; **H04W 8/24**(2009.01)i

According to International Patent Classification (IPC) or to both national classification and IPC

### B.    FIELDS SEARCHED

Minimum documentation searched (classification system followed by classification symbols)

H04W 74/08(2009.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 랜덤 액세스(random access), 제한된 능력(reduced capability), 초기 대역폭 부분 (initial bandwidth part, initial BWP), 링크 실패(link failure), 빔 실패(beam failure), 물리 랜덤 액세스 채널(physical random access channel, PRACH), 프리앰블(preamble)

### C.    DOCUMENTS CONSIDERED TO BE RELEVANT

| Category* | Citation of document, with indication, where appropriate, of the relevant passages | Relevant to claim No. |
|---|---|---|
| Y | KR 10-2020-0051726 A (CONVIDA WIRELESS, LLC) 13 May 2020 (2020-05-13)<br>See paragraphs [0155]-[0156] and [0195]; and claims 1 and 7. | 1-15 |
| Y | ERICSSON. RACH partitioning for Rel-17 features. R2-2104933, 3GPP TSG-RAN WG2 #114e, Electronic meeting. 11 May 2021.<br>See sections 1 and 2.3.1. | 1-15 |
| A | CATT. Identification and access restriction for reduced capability NR devices. R1-2008838, 3GPP TSG RAN WG1 Meeting #103-e, e-Meeting. 01 November 2020.<br>See section 2.2. | 1-15 |
| A | US 2020-0413454 A1 (APPLE INC.) 31 December 2020 (2020-12-31)<br>See claims 1-7. | 1-15 |
| A | KR 10-2020-0136021 A (BEIJING XIAOMI MOBILE SOFTWARE CO., LTD.) 04 December 2020 (2020-12-04)<br>See paragraphs [0080]-[0094]. | 1-15 |

☐ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **17 November 2022** | **18 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/011620**

| Patent document cited in search report | | | Publication date (day/month/year) | Patent family member(s) | | | Publication date (day/month/year) |
|---|---|---|---|---|---|---|---|
| KR | 10-2020-0051726 | A | 13 May 2020 | CN | 111201830 | A | 26 May 2020 |
| | | | | EP | 3679760 | A1 | 15 July 2020 |
| | | | | JP | 2020-533860 | A | 19 November 2020 |
| | | | | US | 2021-0076445 | A1 | 11 March 2021 |
| | | | | WO | 2019-051177 | A1 | 14 March 2019 |
| US | 2020-0413454 | A1 | 31 December 2020 | US | 10779333 | B2 | 15 September 2020 |
| | | | | US | 2019-0045554 | A1 | 07 February 2019 |
| KR | 10-2020-0136021 | A | 04 December 2020 | BR | 112020019582 | A2 | 05 January 2021 |
| | | | | CN | 108496385 | A | 04 September 2018 |
| | | | | EP | 3771281 | A1 | 27 January 2021 |
| | | | | EP | 3771281 | A4 | 07 April 2021 |
| | | | | JP | 2021-517419 | A | 15 July 2021 |
| | | | | RU | 2758926 | C1 | 03 November 2021 |
| | | | | SG | 11202009465 | A | 29 October 2020 |
| | | | | US | 2021-0007132 | A1 | 07 January 2021 |
| | | | | WO | 2019-183881 | A1 | 03 October 2019 |

Form PCT/ISA/210 (patent family annex) (July 2022)